# EUROPEAN PATENT APPLICATION

(11) **EP 4 086 689 A1**
(43) Date of publication of application: **09.11.2022**
(21) Application number: 22169462.3
(22) Date of filing: 22.04.2022
(51) Int. Cl.: G02B 27/01

(54) **HEAD-UP DISPLAY**

(30) Priority: 07.05.2021 TW 110205141 U
(71) Applicant: Pegatron Corporation, Taipei City 112 (TW)
(72) Inventor: KUO, Yu-Feng, 112 TAIPEI CITY (TW)
(74) Representative: Becker, Eberhard

(57) **Abstract**

A head-up display device (100, 200), including a projection unit (110), a lens unit (120), and a geometric cavity (130, 230), is provided. The projection unit (110) is configured to emit an image light beam (Lib). The lens unit (120) is configured to project the image light beam (Lib) to a windshield (20). The geometric cavity (130, 230) includes multiple mirrors (132 to 137, 232 to 234). The mirrors (132 to 137, 232 to 234) sequentially reflect the image light beam (Lib). A route of the image light beam (Lib) in the geometric cavity (130, 230) corresponds to a virtual image distance of an image (30) generated by the image light beam (Lib) projected on the windshield (20).

## Description

### BACKGROUND

### Technology Field

The disclosure relates to a display device, and more particularly to a head-up display device.

### Description of Related Art

A head-up display (HUD) first appeared in a fighter jet to prevent a pilot from frequently looking down at the dashboard and allow the pilot to stay focused by displaying important information on a piece of transparent glass in front of the line of sight. According to different display panels, the head-up display may include a combiner HUD (CHUD) and a windshield HUD (WHUD). The windshield head-up display directly uses the windshield of a car, which has a more integrated display effect, and also facilitates modeling layout.

The virtual image distance (VID) of the head-up display conventionally uses physical mirrors for back and forth reflections. However, in response to the requirement for an augmented reality (AR) head-up display, the position of the virtual image extends from the hood at the front of the car body to the road ahead, thereby increasing the length of the virtual image distance. At this time, a corresponding optical path distance needs to be provided according to the conventional method, so the system size of the head-up display has to relatively increase a lot, causing difficulty in balancing the length of the virtual image distance and the system size.

### SUMMARY

The disclosure provides a head-up display device, which may provide a longer virtual image distance (VID) in a smaller system size.

The head-up display device of the disclosure includes a projection unit, a lens unit, and a geometric cavity. The projection unit is configured to emit an image light beam. The lens unit is configured to project the image light beam to a windshield. The geometric cavity includes multiple mirrors. The mirrors sequentially reflect the image light beam. A route of the image light beam in the geometric cavity corresponds to a virtual image distance of an image generated by the image light beam projected on the windshield.

Based on the above, in the head-up display device of the embodiment of the disclosure, the image light beam is reflected multiple times in the geometric cavity, and a longer projection distance may be formed between the projection unit and the windshield, which means the virtual image and the windshield has a longer imaging distance. In this way, a longer virtual image distance (VID) may be provided in a smaller system size.

In order to make the above-mentioned features and advantages of the disclosure more comprehensible, embodiments accompanied with drawings are described in detail as follows.

### BRIEF DESCRIPTION OF THE DRAWINGS

FIG. 1 is a schematic diagram of a system of a head-up display device according to an embodiment of the disclosure.
FIG. 2 is a schematic diagram of a system of a head-up display device according to another embodiment of the disclosure.

### DESCRIPTION OF THE EMBODIMENTS

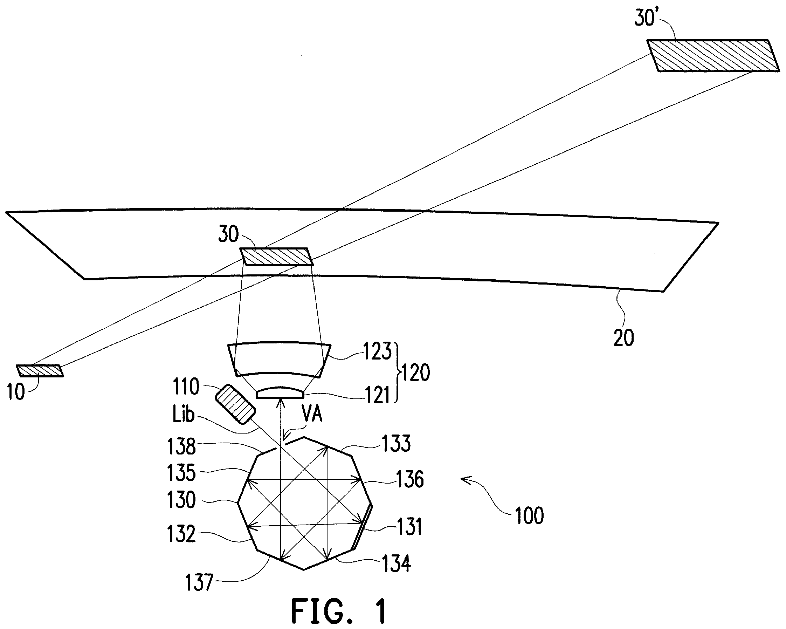

FIG. 1 is a schematic diagram of a system of a head-up display device according to an embodiment of the disclosure. Please refer to FIG. 1. In the embodiment, a head-up display device 100 includes an eye box 10, a projection unit 110, a lens unit 120, and a geometric cavity 130. The eye box 10 is the position of the eyes of a user. The projection unit 110 is configured to emit an image light beam Lib. The geometric cavity 130 is configured to transmit the image light beam Lib emitted from the projection unit 110 and reflected multiple times before it arrives at the lens unit 120. The lens unit 120 is configured to project the image light beam Lib to a windshield 20 to generate an image 30 on the windshield 20. A route of the image light beam Lib in the geometric cavity 130 corresponds to a virtual image distance of the image 30.

In the embodiment, the image light beam Lib is projected to the windshield 20 after being reflected multiple times in the geometric cavity 130. The user may see a virtual image 30' extending to the outside of the windshield from where the image 30 is located on the windshield 20. The distance between the virtual image 30' and the eye box 10 is called the virtual image distance. Therefore, the distance of the route of the image light beam Lib in the geometric cavity 130 is longer, thereby forming a longer projection distance. According to the reflection principle, a longer virtual image distance is equivalently provided between the virtual image 30' and the eye box 10. Since the route of the image light beam Lib is extended by multiple reflections through the geometric cavity 130, the size of the head-up display device 100 may be greatly reduced.

In the embodiment of the disclosure, the geometric cavity 130 includes a diffusion film 131, multiple mirrors 132 to 137, and an output surface 138. The diffusion film 131 is configured to reflect the image light beam Lib from the projection unit 110 at multiple diffusion angles. The mirrors 132 to 137 are configured to sequentially reflect the image light beam Lib from the diffusion film 131. The output surface 138 is configured to guide the image light beam Lib reflected by the mirrors 132 to 137 to the lens unit 120. Moreover, the output surface 138 may have an aperture VA to guide the image light beam Lib to the lens unit 120. Through the reflection abilities of the diffusion film 131 and the mirrors 132 to 137, the geometric cavity 130 may form a three-dimensional space with a reflection loop. Thus, the virtual image distance between the virtual image 30' and the eye box 10 may be extended by multiple reflections.

In the embodiment of the disclosure, the mirrors 132 to 137 may be made of any reflective material, such as glass, metal, etc., but the embodiment of the disclosure is not limited thereto.

In the embodiment of the disclosure, the lens unit 120 includes a collimator lens 121 and a free-form mirror 123. The collimator lens 121 is configured to convert the image light beam Lib into a planar image. The free-form mirror 123 is configured to guide the planar image to the windshield 20.

In the embodiment of the disclosure, the diffusion film 131, the mirrors 132 to 137, and the output surface 138 through which the image light beam Lib travels in the geometric cavity 130 form a regular octagonal cross-section. Moreover, the geometric cavity 130 may have any geometric shape, such as a geometric sphere or a geometric prism.

In the embodiment of the disclosure, the projection unit 110 may be a liquid crystal display (LCD) projection device, a light emitting diode (LED) projection device, a digital light processing (DLP) projection device, a laser projection device, or a liquid crystal on silicon (LCOS) projection device.

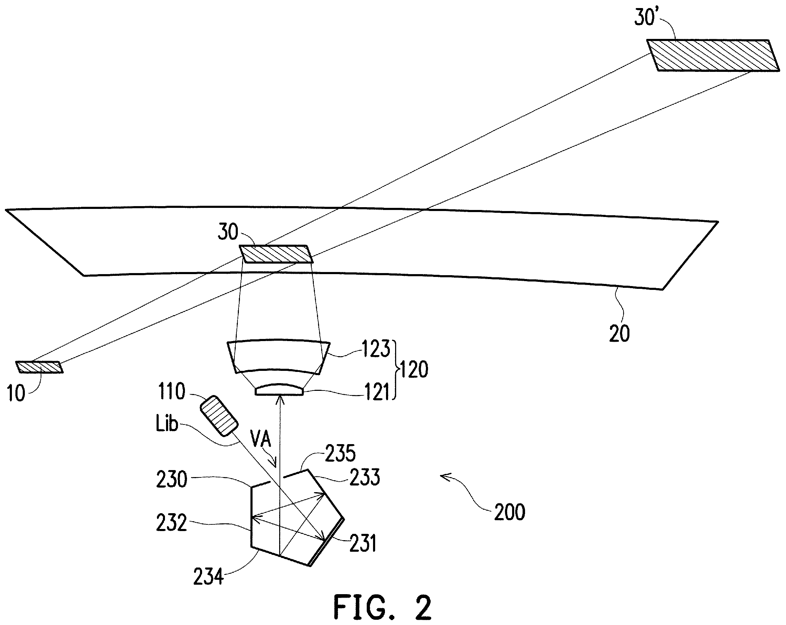

FIG. 2 is a schematic diagram of a system of a head-up display device according to another embodiment of the disclosure. Please refer to FIGs. 1 and 2. A head-up display device 200 is the same as the head-up display device 100, and the difference lies in a geometric cavity 230, wherein the same or similar elements use the same or similar reference numerals. In the embodiment of the disclosure, the geometric cavity 230 includes a diffusion film 231, multiple mirrors 232 to 234, and an output surface 235. Moreover, the diffusion film 231, the mirrors 232 to 234, and the output surface 235 through which the image light beam Lib travels in the geometric cavity 230 form a regular pentagonal cross-section.

In summary, in the head-up display device of the embodiment of the disclosure, the image light beam is reflected multiple times in the geometric cavity, so that a longer projection distance may be provided between the projection unit and the windshield, thereby visually providing a longer virtual imaging distance for the virtual image and the windshield. In this way, a longer virtual image distance (VID) may be provided in a smaller system size.

## Claims

1. A head-up display device (100, 200), comprising:
a projection unit (110), configured to emit an image light beam (Lib);
a lens unit (120), configured to project the image light beam (Lib) to a windshield (20); and
a geometric cavity (130, 230), comprising a plurality of mirrors (132 to 137, 232 to 234), wherein the plurality of mirrors (132 to 137, 232 to 234) sequentially reflects the image light beam (Lib), and a route of the image light beam (Lib) in the geometric cavity (130, 230) corresponds to a virtual image distance of an image (30) generated by the image light beam (Lib) projected on the windshield (20).

2. The head-up display device (100, 200) according to claim 1, wherein the geometric cavity (130, 230) further comprises:
a diffusion film (131, 231), configured to reflect the image light beam (Lib) from the projection unit (110) at a plurality of diffusion angles; and
an output surface (138, 235), configured to guide the image light beam (Lib), reflected by the plurality of mirrors (132 to 137, 232 to 234), to the lens unit (120).

3. The head-up display device (100, 200) according to claim 2, wherein the diffusion film (131, 231), the plurality of mirrors (132 to 137, 232 to 234), and the output surface (138, 235) through which the image light beam (Lib) travels in the geometric cavity (130, 230) form a regular octagonal cross-section.

4. The head-up display device (100, 200) according to claim 2, wherein the diffusion film (131, 231), the plurality of mirrors (132 to 137, 232 to 234), and the output surface (138, 235) through which the image light beam (Lib) travels in the geometric cavity (130, 230) form a regular pentagonal cross-section.

5. The head-up display device (100, 200) according to claim 2, wherein the output surface (138, 235) has an aperture (VA) to guide the image light beam (Lib) to the lens unit (120).

6. The head-up display device (100, 200) according to claim 1 or 2, wherein the lens unit (120) comprises:
a collimator lens (121), configured to convert the image light beam (Lib) into a planar image; and
a free-form mirror (123), configured to guide the planar image to the windshield (20) to generate the image (30).
